(19) **Europäisches Patentamt / European Patent Office / Office européen des brevets**

(11) **EP 2 326 054 B1**

(12) **EUROPEAN PATENT SPECIFICATION**

(45) Date of publication and mention
of the grant of the patent:
**14.08.2013 Bulletin 2013/33**

(51) Int Cl.:
***G06F 17/14*** *(2006.01)*      ***H04L 27/26*** *(2006.01)*

(21) Application number: **10192070.0**

(22) Date of filing: **22.11.2010**

(54) **Communication device and method**

Kommunikationsvorrichtung und -verfahren

Dispositif et procédé de communication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2009 JP 2009266199**

(43) Date of publication of application:
**25.05.2011 Bulletin 2011/21**

(73) Proprietor: **FUJITSU LIMITED
Kawasaki-shi,
Kanagawa 211-8588 (JP)**

(72) Inventor: **Kameya, Jun
Kawasaki-shi Kanagawa 211-8588 (JP)**

(74) Representative: **Fenlon, Christine Lesley et al
Haseltine Lake LLP
Lincoln House, 5th Floor
300 High Holborn
London WC1V 7JH (GB)**

(56) References cited:
**CN-A- 101 820 301**

• **Sesia, S., Toufik, I. and Baker, M.: "LTE - The
UMTS Long Term Evolution: From Theory to
Practice", 17 February 2009 (2009-02-17), Wiley,
online, XP002668428, ISBN: 9780470742891
pages 447-449, * page 448, last paragraph - page
449, paragraph 1 * * figure 19.26 ***

**Description**

**BACKGROUND**

**1. FIELD**

The present invention relates to a communication device and a communication method.

**2. DESCRIPTION OF THE RELATED ART**

In recent years, the standardization of Long Term Evolution (LTE) has been promoted by the Third Generation Partnership Project (3GPP). LTE is a next-generation mobile communication system evolved from the third-generation mobile-phone system. According to the standard of 3GPP, for executing wireless communication, a communication terminal device that employs LTE first establishes a downlink from a base station. Subsequently, the communication terminal device transmits a PRACH (physical random access channel) to the base station to establish an uplink. The term "PRACH" as used herein refers to a physical random access channel used for communication with the base station.

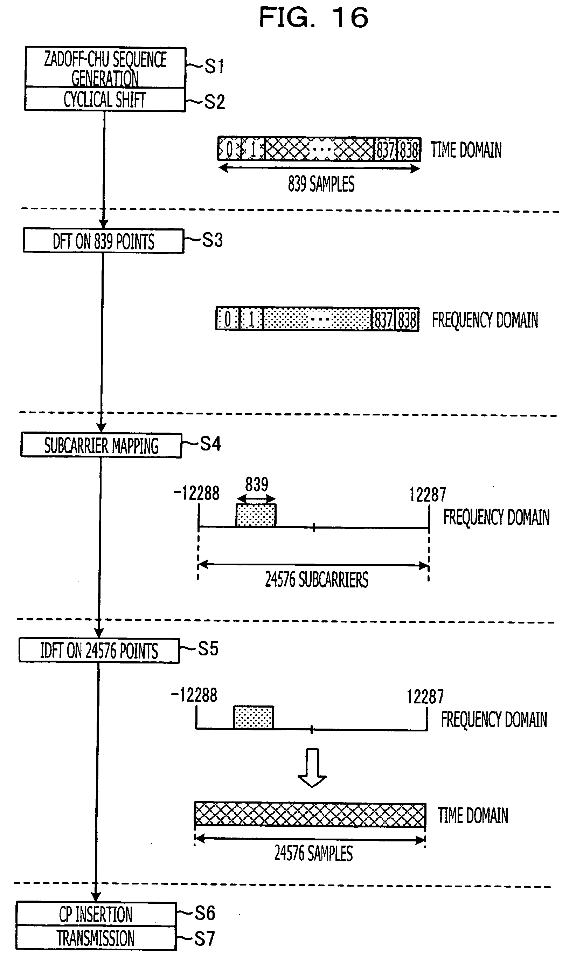

One example of processing in which the communication terminal device transmits a PRACH will now be described with reference to FIG. 16. FIG. 16 illustrates one example of a sequence for transmitting an LTE PRACH. As illustrated in FIG. 16, for transmitting a PRACH, the communication terminal device generates a Zadoff-Chu sequence having a sequence length of 839 samples (in operation S1). The Zadoff-Chu sequence includes symmetric signals having a sequence length of odd-number samples, each having a complex number.

After operation S1, the communication terminal device performs cyclic-shift processing on the generated Zadoff-Chu sequence to generate time-domain signals having a sequence length of 839 samples (in operation S2). The communication terminal device then executes Discrete Fourier Transform (DFT) on the generated time domain signals having the sequence length of 839 samples to transform the signals into 839 frequency domain signals (in operation S3).

Subsequently, the communication terminal device maps the frequency domain signals onto 839 of 24576 subcarriers used for wireless communication (in operation S4). The communication terminal device then executes Inverse Discrete Fourier Transform (IDFT) on all of the subcarriers to transform them into time domain signals having a sequence length of 24576 samples (in operation S5). The communication terminal device then inserts a cyclic prefix (CP) into the time-domain signals (in operation S6) and transmits the CP-inserted signals to the base station as a PRACH (in operation S7).

Examples of related art include Japanese Unexamined Patent Application Publication Nos. 2004-159324 and 2006-60433. A further example of related art is disclosed in Sesia, S., Toufik, I. and Baker, M.: "LTE - The UMTS Long Term Evolution: From Theory to Practice", 17 February 2009, which discloses that in transmission of a PRACH, it is possible to simplify the IDFT structure by shifting the reduced PRACH spectrum instead of the whole signal spectrum.

**SUMMARY**

According to one aspect of the present invention, there is provided a communication device comprising a mapping unit to map frequency domain signals including phase information onto a band, the band is one of bands of subcarriers for transmitting the frequency domain signals; an inverse fast fourier transform unit to perform inverse fast fourier transform on the subcarriers on which the frequency domain signals are mapped by the mapping unit, to transform the subcarriers into time domain signals; an expanding unit to increase the number of samples by up-samplings the time domain signals transformed by the inverse fast fourier transform unit; and a shifting unit to shift the band of the frequency-domain-mapped subcarriers to the specified band; wherein when the twiddle factor for shifting the band to the specified band is an integer power of an imaginary unit, the shift unit is configured to execute interchange processing for interchanging a real number component and an imaginary number component of each of the samples up-sampled by the expanding unit and/or sign-reversal processing for reversing a sign of the real number component or the imaginary number component; and wherein when the when the twiddle factor for shifting the band to the specified band is other than an integer power of the imaginary unit, the shift unit is configured to determine a product of the twiddle factor and each of the samples up-sampled by the expanding unit.

The advantages of the invention will be realized and attained by at least the elements, features, and combinations particularly pointed out in the claims.

It is to be understood that both the foregoing general description and the following detailed description are exemplary and explanatory and are not restrictive of the invention, as claimed.

## BRIEF DESCRIPTION OF THE DRAWING

Preferred features of the present invention will now be described, purely by way of example, with reference to the accompanying drawings, in which:-

FIG. 1 illustrates a communication device according to a first embodiment;
FIG. 2 illustrates one example of a radio communication device according to a second embodiment;
FIG. 3 illustrates subcarriers used for PRACH transmission processing;
FIG. 4 illustrates information stored in a multiplication reduction table unit;
FIG. 5 illustrates cyclic shift;
FIG. 6 illustrates subcarrier shift performed by a radio communication device according to the second embodiment;
FIG. 7 illustrates a subcarrier shift unit;
FIG. 8 illustrates processing performed by the radio communication device;
FIG. 9 illustrates reduction of the amount of multiplication processing of the radio communication device;
FIG. 10 is a flowchart illustrating a flow of processing performed by the radio communication device;
FIG. 11 illustrates RB start positions at which the amount of multiplication may be reduced at 40 MHz;
FIG. 12 illustrates PUSCH transmission;
FIG. 13 illustrates RB start positions at which the amount of multiplication may be reduced during PUSCH transmission with an IFFT size of 32;
FIG. 14 illustrates RB start positions at which the amount of multiplication may be reduced during PUSCH transmission with an IFFT size of 16;
FIG. 15 illustrates one example of a computer for executing a communication program; and
FIG. 16 illustrates a sequence of LTE PRACH transmission.

## DETAILED DESCRIPTION OF THE EMBODIMENTS

In the PRACH transmission technologies of the related art, IDFT processing is executed on all subcarriers. Thus, multiplication processing is executed a vast number of times, resulting in consumption of large amounts of computational resources. More specifically, a communication terminal device performs multiplication processing $N(N-1)$ times as IDFT processing on N actual numbers. In this case, since the subcarriers are complex numbers, the communication terminal device performs four times the amount of multiplication processing performed on real numbers, that is, multiplication processing $4N(N-1)$ times. In the example described above, since the communication terminal device executes IDFT processing on 24576 subcarriers, it executes multiplication processing about 2.4 billion times (i.e., 4 x 24576 x 24575 times). Consequently, the load of the multiplication processing of the communication terminal device is large.

The technology disclosed below provides a communication device and a communication method which reduce the amount of processing in the multiplication processing.

[First Embodiment]

One example of a communication device will be described below in conjunction with a first embodiment. The communication device is, for example, a communication device that is included in a mobile phone or a wireless communication terminal device and that performs at least IDFT (Inverse Discrete Fourier Transform) processing during communication.

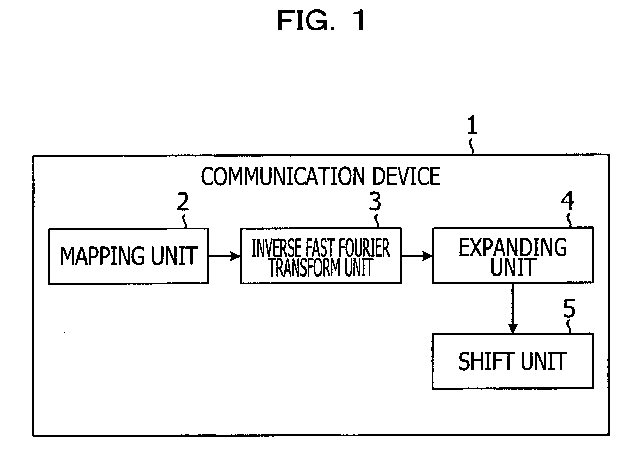

One example of the communication device according to the first embodiment will first be described with reference to FIG. 1. FIG. 1 illustrates the communication device according to the first embodiment. As illustrated in FIG. 1, a communication device 1 has a mapping unit 2, an inverse fast Fourier transform unit 3, an expanding unit 4, and a shift unit 5.

The mapping unit 2 maps frequency domain signals including phase information onto, of a band of subcarriers for transmitting the frequency domain signals, a band in which a twiddle factor for shifting the band of the subcarriers to a specified band is an integer power of an imaginary unit. The inverse fast Fourier transform unit 3 performs inverse fast Fourier transform on the subcarriers on which the frequency domain signals are mapped by the mapping unit 2, to transform the subcarriers into time domain signals. The expanding unit 4 up-samples the time domain signals, transformed by the inverse fast Fourier transform unit 3, to increase the number of samples.

When the twiddle factor is an integer power of the imaginary unit, the shift unit 5 executes interchange processing for interchanging the real number component and the imaginary number component of each of the samples up-sampled by the expanding unit 4 and/or sign-reversal processing for reversing the sign of the real number component or the imaginary-number component. That is, by executing the interchange processing and/or the sign-reversal processing, the shift unit 5 shifts the band of the frequency-domain-signal-mapped subcarriers to the specified band. Thus, in the multiplication processing of the IDFT processing, the communication device 1 may shift the band of the frequency-domain-signal-mapped subcarriers to the specified band by performing the interchanging processing and/or the sign-reversal processing, without calculating the product of the twiddle factor and each sample.

As described above, for mapping signals in a frequency range onto a part of the band of the subcarriers, the communication device 1 maps the signals in the frequency range onto a band in which the twiddle factor is an integer power of the imaginary unit. When the twiddle factor is an integer power of the imaginary unit, the communication device 1 executes the interchange processing and/or the sign-reversal processing on all of the samples expanded by the expanding unit 4, to thereby shift the band of the frequency-band-signal-mapped subcarriers to the specified band. Consequently, the communication device 1 may reduce the number of operations of the multiplication processing, typically performed a vast number of times, in the IDFT processing.

[Second Embodiment]

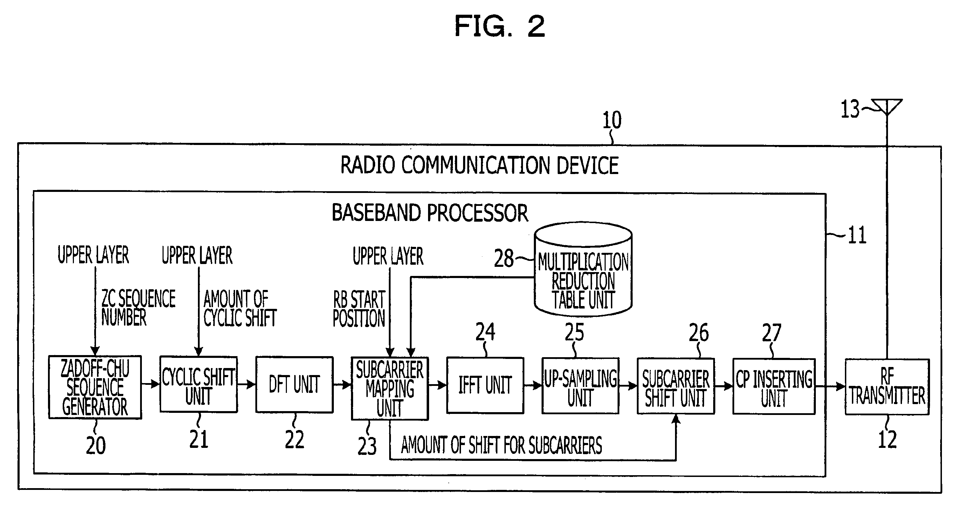

One example of a radio communication device according to a second embodiment will be described below with reference to FIG. 2. FIG. 2 illustrates one example of the radio communication device according to the second embodiment. A description below is given of an example in which the radio communication device is applied to a mobile-phone terminal device.

As illustrated in FIG. 2, a radio communication device 10 has a baseband processor 11, a radio frequency (RF) transmitter 12, and an antenna 13. The radio communication device 10 is a radio communication device employing LTE (Long Term Evolution). The radio communication device 10 maps, onto subcarriers, PRACHs (physical random access channels) for establishing an uplink for a base station and transmits the resulting subcarriers.

The baseband processor 11 executes baseband processing, such as digital modulation, on signals to be transmitted. The baseband processor 11 also generates PRACH signals. More specifically, the baseband processor 11 generates a ZC (Zadoff-Chu) sequence having a sequence length of 839 samples and executes DFT (Discrete Fourier Transform) processing on the generated ZC sequence. Subsequently, the baseband processor 11 maps, onto 2048 subcarriers, the ZC sequence on which the DFT processing was performed. The baseband processor 11 then executes IFFT (Inverse Fast Fourier Transform), on the subcarriers on which the ZC sequence is mapped, to transform the subcarriers into time domain signals having a sequence length of 2048 samples.

In addition, the baseband processor 11 up-samples the time-domain signals having the sequence length of 2048 samples on which the IFFT processing was performed, to convert the time domain signals into time domain signals having a sequence length of 24576 samples. Thereafter, the baseband processor 11 calculates the product of each of the converted time-domain signals having the sequence length of 24576 samples and a twiddle factor (described below) to shift the ZC-sequence-mapped band to a specified band.

The baseband processor 11 then inserts a CP (cyclic prefix) into the ZC-sequence mapped band, shifted to the specified band, to generate PRACH signals. Thereafter, the baseband processor 11 sends the CP-inserted PRACH signals to the RF transmitter 12.

The RF transmitter 12 obtains the time domain signals generated by the baseband processor 11. The RF transmitter 12 then converts the obtained time domain signals into analog signals. Thereafter, the RF transmitter 12 transmits the analog signals to the base station via the antenna 13.

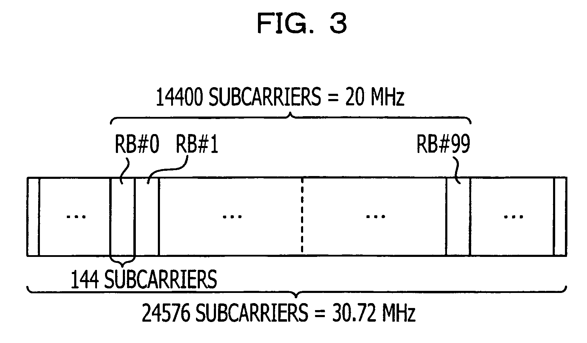

Now, the subcarriers that the radio communication device 10 uses to transmit PRACHs will be described with reference to FIG. 3. FIG. 3 illustrates subcarriers used in PRACH transmission processing. As illustrated in FIG. 3, the radio communication device 10 uses 14400 subcarriers in a center band of 24576 subcarriers to perform radio communication in a maximum bandwidth of 20 MHz.

The radio communication device 10 transmits PRACHs by using subcarriers of each of 100 RBs (resource blocks), each including 144 subcarriers. For example, the radio communication device 10 requires 839 subcarriers to transmit a PRACH. Thus, the radio communication device 10 transmits a PRACH by using 6 RBs (864 subcarriers) of the 100-RB subcarriers.

In the following description, it is assumed that the radio communication device 10 uses the 100-RB subcarriers in the center band of the 24576 subcarriers to transmit PRACHs. As illustrated in FIG. 3, the RBs are denoted in such a manner that, of the 100-RB subcarriers, the RB at the lowest band edge is indicated by RB#0 and the RB at the highest band edge is indicated by RB#99. Of the 24576 subcarriers, the subcarrier at the lowest band edge is referred to as the -12288th subcarrier and the subcarrier at the highest band edge is referred to as the 12287th subcarrier.

Next, processing in which the baseband processor 11 generates PRACH signals will be described in detail.

Referring back to FIG. 2, the baseband processor 11 has a Zadoff-Chu sequence generator 20, a cyclic shift unit 21, a DFT unit 22, and a subcarrier mapping unit 23. The baseband processor 11 further has an IFFT unit 24, an up-sampling unit 25, a subcarrier shift unit 26, a CP inserting unit 27, and a multiplication reduction table unit 28. Although not illustrated in FIG. 2, the baseband processor 11 has a radio communication processor for executing digital modulation and the like on signals to be transmitted. The processing executed by the baseband processor 11 is not limited to only the processing for generating PRACH signals.

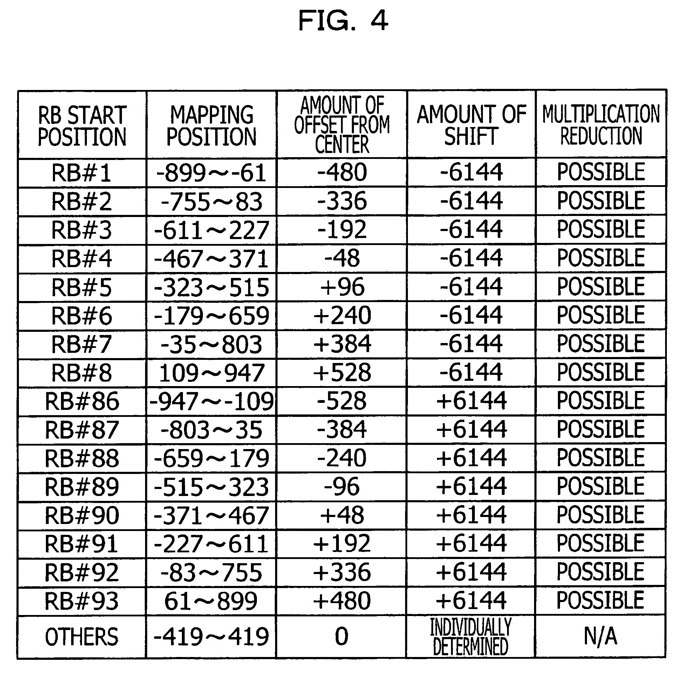

The multiplication reduction table unit 28 stores, of bands of subcarriers onto which the subcarrier mapping unit 23 may map the frequency domain signals, a subcarrier band in which the value of the twiddle factor is an integer power of the imaginary unit. More specifically, the multiplication reduction table unit 28 stores, of information illustrated in FIG. 4, a RB (resource block) start position, a mapping position, an amount of offset from the center, and the amount of shift in association with each other. FIG. 4 illustrates information stored in the multiplication reduction table unit.

Herein, the RB start position stored in the multiplication reduction table unit 28 refers to information indicating the band of subcarriers onto which a ZC (Zadoff-Chu) sequence described below is to be eventually mapped. The mapping position refers to information indicating the band onto which the ZC sequence is to be mapped by the subcarrier mapping unit 23, as described below. The amount of offset from the center refers to information indicating a displacement between the band onto which the ZC sequence is to be mapped by the subcarrier mapping unit 23 and the center of the subcarriers, as described below. The amount of shift refers to information indicating an amount by which the subcarrier shift unit 26 is to shift the ZC-sequence-mapped band.

For example, the multiplication reduction table unit 28 stores an RB start position "RB#5", a mapping position "-323 to 515", an amount of offset from the center "+96", and the amount of shift "-6144" in association with each other.

Referring back to FIG. 2, the Zadoff-Chu sequence generator 20 generates a Zadoff-Chu sequence defined by 3GPP (Third Generation Partnership Project). More specifically, the Zadoff-Chu sequence generator 20 first receives, from an upper layer for controlling the baseband processor 11, a notification specifying a ZC sequence number. In response to the ZC sequence number specified by the upper layer, the Zadoff-Chu sequence generator 20 generates 839 complex numbers in accordance with the specified ZC sequence number. The Zadoff-Chu sequence generator 20 then sends the generated 839 complex numbers to the cyclic shift unit 21 as a ZC sequence.

When the Zadoff-Chu sequence generator 20 generates a ZC sequence, the cyclic shift unit 21 cyclically shifts the order of the numeric values in the generated ZC sequence. More specifically, the cyclic shift unit 21 obtains the ZC sequence from the Zadoff-Chu sequence generator 20 and the cyclic shift unit 21 receives, from the upper layer, a notification specifying the amount of cyclic shift, the amount being an amount by which the ZC sequence is to be cyclically shifted.

When the amount of cyclic shift is specified by the upper layer, the cyclic shift unit 21 cyclically shifts the order of the complex numbers included in the ZC sequence in accordance with the order corresponding to the specified amount of cyclic shift. The cyclic shift unit 21 sends the cyclically shifted ZC sequence to the DFT unit 22. The expression "cyclical shift" as used herein refers to processing for changing the order of the complex numbers included in the ZC sequence shaped in a ring.

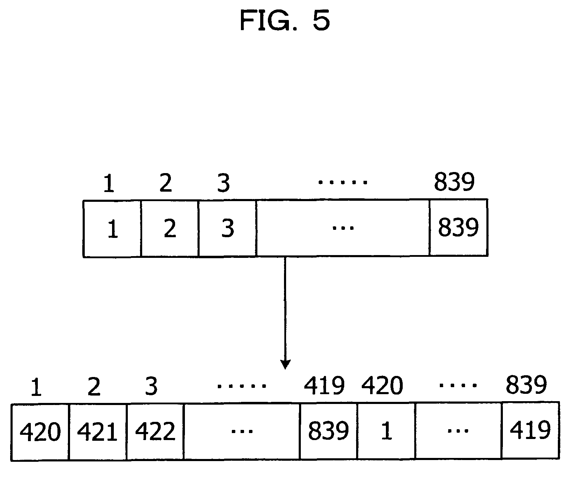

A case in which the cyclic shift unit 21 receives, from the upper layer, a notification specifying an amount of cyclic shift of "419" will now be described by way of example. As illustrated in FIG. 5, when the amount of cyclic shift "419" is specified by the upper layer, the cyclic shift unit 21 performs shifting so that the 1st to 419th complex numbers in the ZC sequence become the 420th to 839th complex numbers and also performs shifting so that the 420th to 839th complex numbers in the ZC sequence become the 1st to 419th complex numbers. The cyclic shift unit 21 then sends the cyclically shifted ZC sequence to the DFT unit 22. FIG. 5 illustrates cyclic shift.

Referring back to FIG. 2, the DFT unit 22 executes discrete Fourier transform processing on the ZC sequence cyclically shifted by the cyclic shift unit 21, to transform the ZC sequence into frequency domain signals. Specifically, the DFT unit 22 first obtains a ZC sequence having 839 complex numbers cyclically shifted by the cyclic shift unit 21.

The DFT unit 22 then executes the discrete Fourier transform processing on the obtained ZC sequence to transform the ZC sequence into frequency domain signals. Thereafter, the DFT unit 22 sends, to the subcarrier mapping unit 23, the ZC sequence transformed into the frequency domain signals.

The subcarrier mapping unit 23 maps frequency domain signals including phase information onto, of bands of subcarriers for transmitting the frequency domain signals, a band in which a twiddle factor for shifting the band of the subcarriers to the specified band is an integer power of an imaginary unit. The subcarrier mapping unit 23 maps the frequency domain signals onto the subcarrier band stored in the multiplication reduction table unit 28.

More specifically, the subcarrier mapping unit 23 obtains, from the DFT unit 22, the ZC sequence transformed into the frequency domain signals and also receives a notification specifying an RB start position from the upper layer. In response to the RB start position specified by the upper layer, the subcarrier mapping unit 23 refers to the multiplication reduction table unit 28.

When the RB start position specified by the upper layer is stored in the multiplication reduction table unit 28, the subcarrier mapping unit 23 obtains, from the multiplication reduction table unit 28, the mapping position associated with the RB start position specified by the upper layer. The subcarrier mapping unit 23 also obtains, from the multiplication reduction table unit 28, the amount of shift associated with the RB start position specified by the upper layer.

The subcarrier mapping unit 23 then maps the ZC sequence, obtained from the DFT unit 22, at the mapping position obtained from the multiplication reduction table unit 28 and included in 2048 subcarriers. Thereafter, the subcarrier mapping unit 23 sends, to the IFFT unit 24, the 2048 subcarriers on which the ZC sequence is mapped. The subcarrier mapping unit 23 also reports, to the subcarrier shift unit 26, the amount of shift obtained from the multiplication reduction table unit 28.

On the other hand, when the RB start position specified by the upper layer is not stored in the multiplication reduction table unit 28, the subcarrier mapping unit 23 maps the obtained ZC sequence onto the center band of the 2048 subcarriers. Thereafter, the subcarrier mapping unit 23 sends, to the IFFT unit 24, the subcarriers on which the ZC sequence is mapped. The subcarrier mapping unit 23 also determines an amount of shift and reports the determined amount of shift to the subcarrier shift unit 26.

For example, the subcarrier mapping unit 23 obtains, from the DFT unit 22, the ZC sequence transformed into the frequency domain signals and also receives, from the upper layer, a notification specifying RB#5 as the RB start position. In response to RB#5 specified by the upper layer, the subcarrier mapping unit 23 refers to the multiplication reduction table unit 28 to determine whether or not RB#5 is stored therein. Upon determining that RB#5 is stored in the multiplication reduction table unit 28, the subcarrier mapping unit 23 obtains the mapping position -323 to 515 stored in association with RB#5.

Of the 2048 subcarriers, the subcarrier mapping unit 23 regards the subcarrier at the lowest band edge as the -1024th subcarrier and regards the subcarrier at the highest band edge as the 1023th subcarrier. The subcarrier mapping unit 23 maps, at the obtained mapping position "-323 to 515" of the - 1024th to 1023th subcarriers, the ZC sequence obtained from the DFT unit 22.

Thereafter, the subcarrier mapping unit 23 sends, to the IFFT unit 24, the 2048 subcarriers on which the ZC sequence is mapped. The subcarrier mapping unit 23 also refers to the multiplication reduction table unit 28 to obtain the amount of shift "-6144" stored in association with RB#5. The subcarrier mapping unit 23 also reports the obtained amount of shift "-6144" to the subcarrier shift unit 26.

For example, when RB#9 is specified by the upper layer, the subcarrier mapping unit 23 refers to the multiplication reduction table unit 28 to determine whether or not RB#9 is stored therein. When the subcarrier mapping unit 23 determines that RB#9 is not stored in the multiplication reduction table unit 28, the subcarrier mapping unit 23 maps the obtained ZC sequence onto the -419th to 419th subcarriers in the center band of the 2048 subcarriers.

Thereafter, the subcarrier mapping unit 23 sends, to the IFFT unit 24, the 2048 subcarriers on which the ZC sequence is mapped. The subcarrier mapping unit 23 determines an amount by which the subcarrier shift unit 26 is to shift the ZC sequence, by using equation (1) below.

$$ n_{shift} = 144 \times (RBH + 3) - 7200 \quad \cdots (1) $$

In this case, shift in equation (1) indicates the amount by which the subcarrier shift unit 26 is to shift the ZC sequence and RBH indicates the RB start position specified by the upper layer. When RB#9 is specified by the upper layer as the RB start position, the subcarrier mapping unit 23 substitutes "9" into RBH in equation (1) to determine an amount "-5472" by which the subcarrier shift unit 26 is to shift the ZC sequence. The subcarrier mapping unit 23 then reports the determined amount of shift "-5472" to the subcarrier shift unit 26.

The IFFT unit 24 performs inverse fast Fourier transform on the subcarriers on which the frequency domain signals are mapped by the subcarrier mapping unit 23, to transform the subcarriers into time domain signals. More specifically, the IFFT unit 24 obtains the 2048 subcarriers on which the ZC sequence is mapped by the subcarrier mapping unit 23 and then executes inverse fast Fourier transform on the obtained 2048 subcarriers to transform the subcarriers into time domain signals.

In this case, when the IFFT unit 24 executes inverse fast Fourier transform on the frequency domain signals, it generates time domain signals having the same sequence length as that of the frequency domain signals. Thus, when the IFFT unit 24 executes inverse fast Fourier transform on the 2048 subcarriers, it generates time domain signals having a sequence length of 2048 samples. Thereafter, the IFFT unit 24 sends, to the up-sampling unit 25, the transformed time domain signals having the sequence length of 2048 samples.

The up-sampling unit 25 up-samples the time domain signals, transformed by the IFFT unit 24, to increase the number of samples. More specifically, the up-sampling unit 25 obtains, from the IFFT unit 24, the time domain signals having the sequence length of 2048 samples and then up-samples the obtained time domain signals having the sequence length of 2048 samples into time domain signals having a sequence length of 24576 samples. Thereafter, the up-sampling unit 25 sends, to the subcarrier shift unit 26, the up-sampled time domain signals having the sequence length of 24576 samples.

The term "up-sampling" as used herein refers to re-sampling signals, expressed by a given number of samples, with a larger number of samples. For example, the up-sampling unit 25 complements the time domain signals having a sequence length of 2048 samples by using a specified filter and up-samples the complemented time domain signals to generate time domain signals having a sequence length of 24576 samples.

When the twiddle factor is an integer power of the imaginary unit, the subcarrier shift unit 26 executes interchange processing for interchanging between the real number component and the imaginary part component of each sample up-sampled by the up-sampling unit 25. When the twiddle factor is an integer power of the imaginary unit, the subcarrier shift unit 26 also executes sign-reversal processing for reversing the sign of the real number component or the imaginary part component of each sample up-sampled by the up-sampling unit 25.

That is, by executing the interchange processing and/or the sign-reversal processing, the subcarrier shift unit 26 shifts the band of the frequency-domain-signal-mapped subcarriers to the specified band. When the twiddle factor is other than an integer power of the imaginary unit, the subcarrier shift unit 26 calculates the product of the twiddle factor and each sample to shift the band of the frequency-domain-signal-mapped subcarriers to the specified band.

More specifically, the subcarrier shift unit 26 obtains time domain signals having a sequence length of 24576 samples up-sampled by the up-sampling unit 25 and also obtains the amount of shift from the subcarrier mapping unit 23.

The subcarrier shift unit 26 then calculates the product of the twiddle factor and each of the obtained time domain signals having the sequence length of 24576 samples to thereby shift the band of the ZC-sequence-mapped subcarriers to the specified band. When the obtained amount of shift is $\pm 6144$, the subcarrier shift unit 26 executes the interchange processing and/or the sign-reversal processing to thereby shift the band of the ZC-sequence-mapped subcarriers to the specified band.

The "twiddle factor" as used herein refers to a factor for shifting the band of the subcarriers, on which the ZC sequence is mapped by the subcarrier mapping unit 23, to the specified band. For example, the amount of shift reported from the subcarrier mapping unit 23 is indicated by $n_{shift}$, the order of each sample obtained from the up-sampling unit 25 is indicated by k, the value of each sample is indicated by x(k), the product of the twiddle factor and each sample is indicated by $X_{shift}(k)$, and the imaginary unit is indicated by i. In this case, the twiddle factor is expressed by expression (2) below.

$$\exp\left( i\frac{2\pi n_{shift}}{24576}\cdot k \right) \quad \cdots (2)$$

The product $X_{shift}(k)$ of the twiddle factor and each sample is expressed by equation (3) below.

$$x_{shift}(k) = x(k)\cdot\exp\left( i\frac{2\pi n_{shift}}{24576}\cdot k \right) \quad \cdots (3)$$

In this case, when $n_{shift}$ is $\pm 6144$, the product $X_{shift}(k)$ of the twiddle factor and each sample is given by equation (4) below.

$$x_{shift}(k) = x(k)\cdot\exp\left( i\frac{\pi}{2}k \right) \quad \cdots (4)$$

That is, when $n_{shift}$ is $\pm 6144$, the twiddle factor is one of the imaginary unit "i", "1", a negative imaginary unit "-i", and "-1". When the real number component of the value x(k) of each sample is indicated by I and the imaginary number component is indicated by Q, $X_{shift}(k)$ is given by one of equations (5) to (8) described below.

$$x_{shift}(k) = x(k)\cdot 1 = I + Qi \quad \cdots (5)$$

$$x_{shift}(k) = x(k)\cdot i = Ii - Q \quad \cdots (6)$$

$$x_{shift}(k) = x(k) \cdot (-1) = -I - Qi \quad \cdots (7)$$

$$x_{shift}(k) = x(k) \cdot (-i) = -Ii + Q \quad \cdots (8)$$

Thus, when the twiddle factor is "1", the subcarrier shift unit 26 uses the value of each of the samples, up-sampled by the up-sampling unit 25, as a value of a sample resulting from shifting of the band of the frequency-domain-signal-mapped subcarriers to the specified band. When the twiddle factor has the imaginary unit "i", the subcarrier shift unit 26 performs the interchange processing and reverses the sign of the real number component resulting from the interchange processing to thereby shift the band of the frequency-domain-signal-mapped subcarriers to the specified band.

When the twiddle factor is "-1", the subcarrier shift unit 26 performs the sign-reversal processing to shift the band of the frequency-domain-signals-mapped subcarriers to the specified band. When the twiddle factor has a negative imaginary unit "-i", the subcarrier shift unit 26 performs the interchange processing and reverses the sign of the imaginary part component resulting from the interchange processing to thereby shift the band of the frequency-domain-signal-mapped subcarriers to the specified band.

That is, when $n_{shift}$ is $\pm 6144$, the subcarrier shift unit 26 may calculate the product of the twiddle factor and each of the samples up-sampled by the up-sampling unit 25, by executing the interchange processing and/or the sign-reversal processing. Thus, when $n_{shift}$ is $\pm 6144$, the subcarrier shift unit 26 may shift the band of the ZC-sequence-mapped subcarriers to the specified band without executing the multiplication processing.

When the reported amount of shift is other than $\pm 6144$, the subcarrier shift unit 26 multiplies the twiddle factor and each of the samples of the time domain signals up-sampled by the up-sampling unit 25 to calculate the product of the twiddle factor and each sample. Specifically, the subcarrier shift unit 26 uses equation (3) noted above to calculate the product of the twiddle factor and each sample.

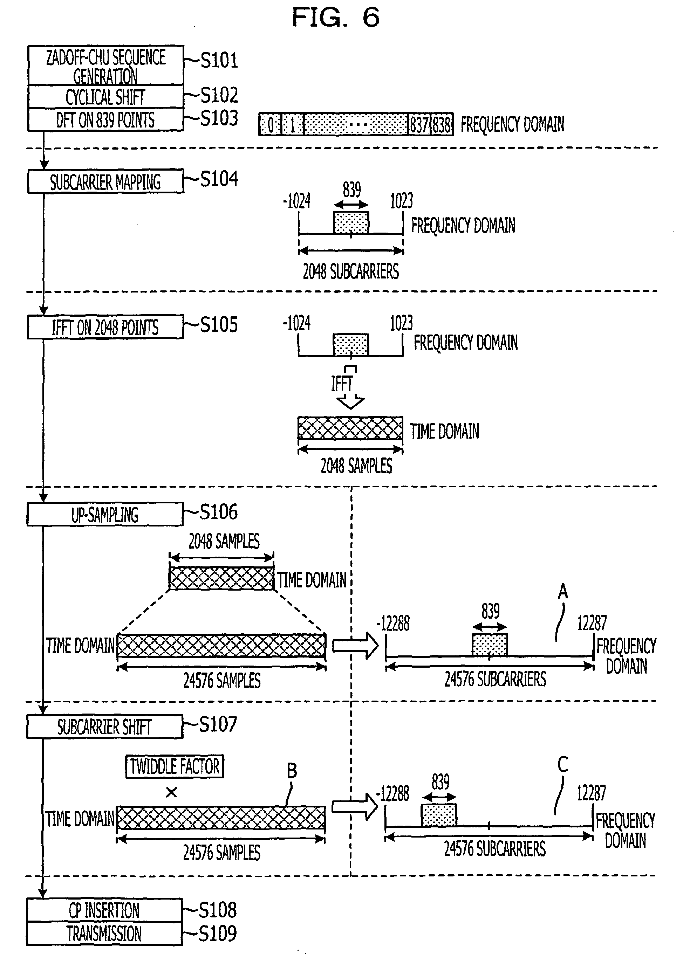

Next, subcarrier shift processing executed by the subcarrier shift unit 26 will be described with reference to FIG. 6. FIG. 6 illustrates subcarrier shift performed by the radio communication device according to the second embodiment. As illustrated in FIG. 6, the subcarrier shift unit 26 obtains time domain signals having a sequence length of 24576 samples, the signals being generated through operations S101 to S106. In operation S107, through calculation of the product of the twiddle factor and each of the obtained time domain signals having the sequence length of 24576 samples, the subcarrier shift unit 26 may shift the ZC sequence mapped on the center band to the specified band.

That is, as indicated by A in FIG. 6, the subcarrier shift unit 26 obtains time domain signals having a sequence length of 24576 samples in the center band of which the ZC sequence is mapped and then calculates the product of the twiddle factor and each of the time domain signals, as indicated by B in FIG. 6, to shift the band of the ZC-sequence-mapped subcarriers to the specified band, as indicated by C in FIG. 6.

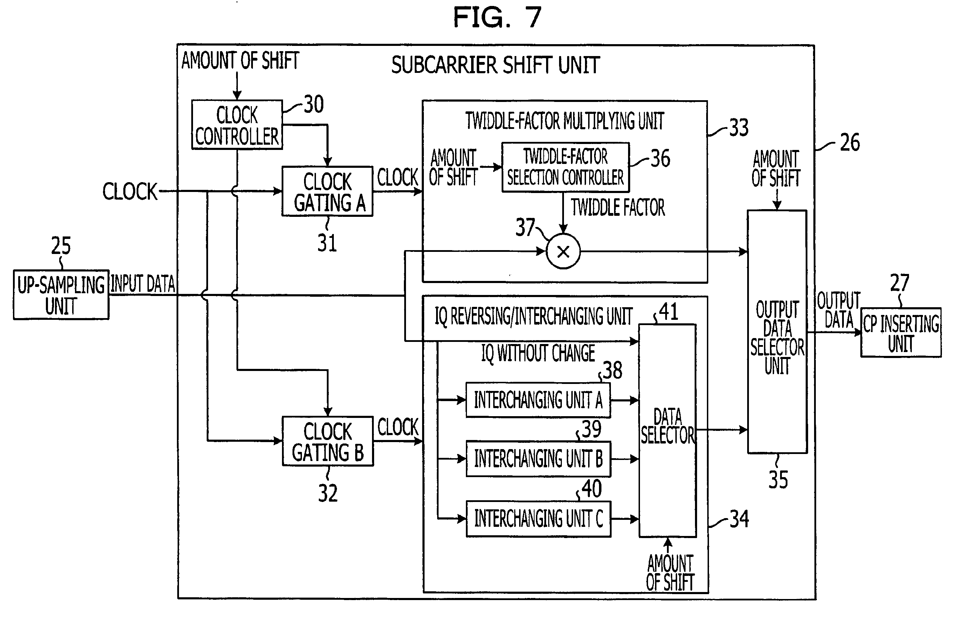

Next, the configuration of the subcarrier shift unit 26 will be described with reference to FIG. 7. FIG. 7 illustrates the subcarrier shift unit. As illustrated in FIG. 7, the subcarrier shift unit 26 has a clock controller 30, a clock gating A 31, a clocking gating B 32, a twiddle-factor multiplying unit 33, an IQ (in-phase/quadrature-phase) reversing/interchanging unit 34, and an output-data selector unit 35. The twiddle-factor multiplying unit 33 has a twiddle-factor selection controller 36 and a multiplier 37. The IQ reversing/interchanging unit 34 has an interchanging unit A 38, an interchanging unit B 39, an interchanging unit C 40, and a data selector 41.

The clock controller 30 obtains the amount of shift from the subcarrier mapping unit 23. When the obtained amount of shift is $\pm 6144$, the clock controller 30 stops the clock gating A 31 and drives the clocking gating B 32. When the obtained amount of shift is other than $\pm 6144$, the clock controller 30 drives the clock gating A 31 and stops the clocking gating B 32.

The clock gating A 31 serves as a switch for sending a clock to the twiddle-factor multiplying unit 33. When the clock gating A 31 is driven by the clock controller 30, the clock gating A 31 sends a clock to the twiddle-factor multiplying unit 33 to thereby drive the twiddle-factor multiplying unit 33.

The clocking gating B 32 serves as a switch for sending a clock to the IQ reversing/interchanging unit 34. When the clock gating B 32 is driven by the clock controller 30, the clock gating B 32 sends a clock to the IQ reversing/ interchanging unit 34 to thereby drive the IQ reversing/interchanging unit 34.

The twiddle-factor multiplying unit 33 obtains time domain signals having a sequence length of 24576 samples up-sampled by the up-sampling unit 25. The twiddle-factor multiplying unit 33 also obtains the amount of shift from the subcarrier mapping unit 23. The twiddle-factor multiplying unit 33 then calculates the product of the twiddle factor and each sample of the obtained time domain signal to shift the band of the ZC-sequence-mapped subcarriers to the specified band.

The IQ reversing/interchanging unit 34 obtains time domain signals having a sequence length of 24576 samples up-sampled by the up-sampling unit 25. The IQ reversing/interchanging unit 34 also obtains the amount of shift from the subcarrier mapping unit 23. The IQ reversing/interchanging unit 34 then executes the interchange processing and/or the sign-reversal processing on each of the obtained samples to thereby shift the band of the ZC-sequence-mapped subcarriers to the specified band.

The output-data selector unit 35 also obtains the amount of shift from the subcarrier mapping unit 23. When the obtained amount of shift is $\pm$ 6144, the output-data selector unit 35 sends, to the CP inserting unit 27, the values output from the IQ reversing/interchanging unit 34. When the obtained amount of shift is other than $\pm$ 6144, the output-data selector unit 35 sends, to the CP inserting unit 27, the values output from the twiddle-factor multiplying unit 33.

The twiddle-factor selection controller 36 obtains the amount of shift from the subcarrier mapping unit 23. The twiddle-factor selection controller 36 then determines a twiddle factor for each sample by using expression (2) noted above. The twiddle-factor selection controller 36 then sends the determined twiddle factor to the multiplier 37. The multiplier 37 calculates the product of the twiddle factor obtained from the twiddle-factor selection controller 36 and each sample obtained from the up-sampling unit 25 and sends the calculated product to the output-data selector unit 35.

In response to the time domain signals from the up-sampling unit 25, the interchanging unit A 38 performs interchange processing on the real number component and the imaginary part component of each sample and also executes the sign-reversal processing for reversing the sign of the interchanged real number component. The interchanging unit A 38 then sends, to the data selector 41, each sample on which the interchange processing and the sign-reversal processing were executed.

In response to the time domain signals from the up-sampling unit 25, the interchanging unit B 39 executes the sign-reversal processing on the real number component and the imaginary part component of each sample. The interchanging unit B 39 then sends, to the data selector 41, each sample on which the sign-reversal processing was performed.

In response to the time domain signals from the up-sampling unit 25, the interchanging unit C 40 performs the interchange processing on the real number component and the imaginary part component of each sample and also executes sign-reversal processing for reversing the sign of the interchanged imaginary part component. The interchanging unit C 40 then sends, to the data selector 41, each sample on which the interchange processing and the sign-reversal processing were executed.

The data selector 41 obtains time domain signals having a sequence length of 24576 samples up-sampled by the up-sampling unit 25. In this case, the data selector 41 sequentially obtains, one by one, the time domain signals having the 24576 samples up-sampled by the up-sampling unit 25. The data selector 41 counts the number of each sample of the time domain signals having the 24576 samples, regarding that the signal obtained first is the 0th signal thereof and the signal obtained last is the 24575th signal. The data selector 41 also obtains, from the interchanging units 38 to 40, the values of the samples on which the interchange processing and/or the sign-reversal processing was executed. In addition, the data selector 41 obtains the amount of shift from the subcarrier mapping unit 23.

When the obtained amount of shift is 6144 and the remainder obtained by dividing the counted sample number by 4 is "0", the data selector 41 selects the value of the sample obtained from the up-sampling unit 25. When the obtained amount of shift is 6144 and the remainder obtained by dividing the counted sample number by 4 is "1", the data selector 41 selects the value of the sample obtained from the interchanging unit A 38.

When the obtained amount of shift is 6144 and the remainder obtained by dividing the counted sample number by 4 is "2", the data selector 41 selects the value of the sample obtained from the interchanging unit B 39. When the obtained amount of shift is 6144 and the remainder obtained by dividing the counted sample number by 4 is "3", the data selector 41 selects the value of the sample obtained from the interchanging unit C 40. The data selector 41 sends each selected sample value to the output-data selector unit 35.

When the obtained amount of shift is -6144 and the remainder obtained by dividing the counted sample number by 4 is "0", the data selector 41 selects the value of the sample obtained from the up-sampling unit 25. When the obtained amount of shift is -6144 and the remainder obtained by dividing the counted sample number by 4 is "1", the data selector 41 selects the value of the sample obtained from the interchanging unit C 40.

When the obtained amount of shift is -6144 and the remainder obtained by dividing the counted sample number by 4 is "2", the data selector 41 selects the value of the sample obtained from the interchanging unit B 39. When the obtained amount of shift is -6144 and the remainder obtained by dividing the counted sample number by 4 is "3", the data selector 41 selects the value of the sample obtained from the interchanging unit A 38. The data selector 41 sends each selected sample value to the output-data selector unit 35.

Referring back to FIG. 2, upon obtaining the time domain signals having the sequence length of 24576 subcarriers from the subcarrier shift unit 26, the CP inserting unit 27 inserts a CP for demodulation thereinto and sends the resulting time domain signals to the RF transmitter 12.

The baseband processor 11 and the RF transmitter 12 are, for example, electronic circuits. The Zadoff-Chu sequence generator 20, the cyclic shift unit 21, the DFT unit 22, the subcarrier mapping unit 23, the IFFT unit 24, the up-sampling unit 25, the subcarrier shift unit 26, and the CP inserting unit 27 are, for example, electronic circuits. The clock controller 30, the twiddle-factor multiplying unit 33, the IQ reversing/interchanging unit 34, and the output-data selector unit 35 are, for example, electronic circuits. The twiddle-factor selection controller 36, the multiplier 37, the interchanging unit A 38, the interchanging unit B 39, the interchanging unit C 40, and the data selector 41 are, for example, electronic circuits. Examples of the electronic circuits include a CPU (central processing unit), an MPU (micro processing unit), and integrated circuits, such as an ASIC (application specific integrated circuit) and an FPGA (field programmable gate array).

The multiplication reduction table unit 28 may be implemented by a storage device including a hard disk, an optical disk, or a semiconductor memory device, such as a RAM (random access memory), a ROM (read only memory), or a flash memory. The clock gating A 31 and the clock gating B 32 are, for example, switches.

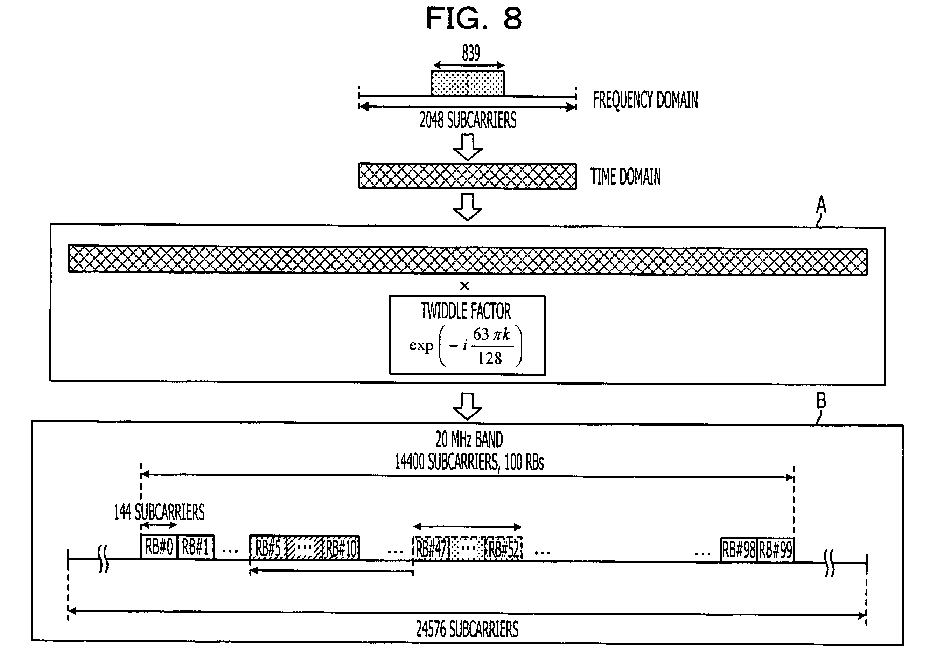

Next, processing performed by the radio communication device 10 according to the second embodiment will be described with reference to FIG. 8. FIG. 8 illustrates processing performed by the radio communication device. As illustrated in FIG. 8, the radio communication device 10 maps a ZC sequence onto 2048 subcarriers, not on 24576 subcarriers.

The radio communication device 10 then executes IFFT processing on the subcarriers on which the ZC sequence is mapped, to generate time domain signals having the sequence length of 2048 samples. Thereafter, the radio communication device 10 up-samples the generated time domain signals having a sequence length of 2048 samples to expand the sampled time domain signals to time domain signals having a sequence length of 24576 samples.

In addition, the radio communication device 10 calculates the product of the twiddle factor and each sample of the time domain signals, as indicated by A in FIG. 8, to shift the band of the ZC-sequence-mapped subcarriers to the specified band, as indicated by B in FIG. 8. Thus, the radio communication device 10 may generate PRACH signals without performing IDFT processing on the 24576 subcarriers.

Specifically, when IDFT processing is executed on 24576 subcarriers, the radio communication device 10 executes multiplication processing about 2.4 billion times. In this case, when IFFT processing is executed on N subcarriers, the radio communication device 10 executes multiplication processing $4N\log N$ times. Thus, when IFFT processing is executed on 2048 subcarriers, the radio communication device 10 executes multiplication processing about 90000 times (i.e., $4 \times 2048 \times \log(2048)$). As a result, the radio communication device 10 may significantly reduce the amount of multiplication processing.

In this case, in order to shift the band of the ZC-sequence-mapped subcarriers, the radio communication device 10 calculates the product of the twiddle factor and each of the time domain signals having a sequence length of 24576 samples. Thus, the radio communication device 10 executes multiplication processing about 100000 times apart from the IFFT processing.

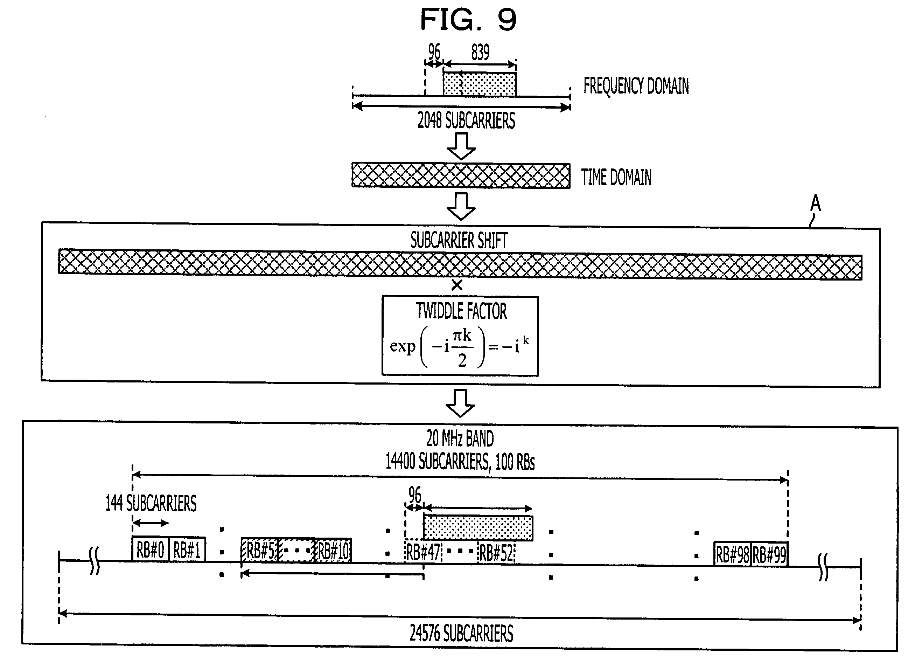

Accordingly, as illustrated in FIG. 9, for mapping the ZC sequence onto the subcarriers, the radio communication device 10 performs mapping so that the amount of shift by which the band of the subcarriers onto which the ZC sequence is to be mapped is to be shifted becomes $\pm6144$. FIG. 9 illustrates reduction of the amount of multiplication processing of the radio communication device. In the example illustrated in FIG. 9, the radio communication device 10 is assumed to shift the band of the ZC-sequence-mapped subcarriers to the RB start position "RB#5".

As illustrated in FIG. 9, the radio communication device 10 maps the ZC sequence onto a band displaced by 96 subcarriers from the center of the 2048 subcarriers to a higher band. When the radio communication device 10 maps the ZC sequence onto the band displaced by 96 subcarriers from the center of the 2048 subcarriers to the higher band, the twiddle factor becomes an integer power of the imaginary unit and thus the radio communication device 10 may calculate the product of the twiddle factor and each sample without executing the multiplication processing. As a result, the radio communication device 10 may further reduce the amount of multiplication processing.

In addition, as illustrated in FIG. 4, when the RB start position is to be set to one of RB#1 to RB#8 and RB#86 to RB#93, the radio communication device 10 may map the ZC sequence onto the band in which the amount of shift is $\pm6144$. Consequently, the radio communication device 10 may eliminate the need for the multiplication processing on the 17 RB start positions of the 95 RB start positions, thus making it possible to reduce or eliminate the need for about 17% of the multiplication processing.

Thus, when the radio communication device 10 uses hardware to execute the multiplication processing, it may reduce the amount of the multiplication processing and thus may reduce the power consumed. Thus, when the radio communication device 10 uses hardware to execute the multiplication processing, it may reduce the amount of memory needed for the multiplication processing.

[Processing of Radio Communication Device]

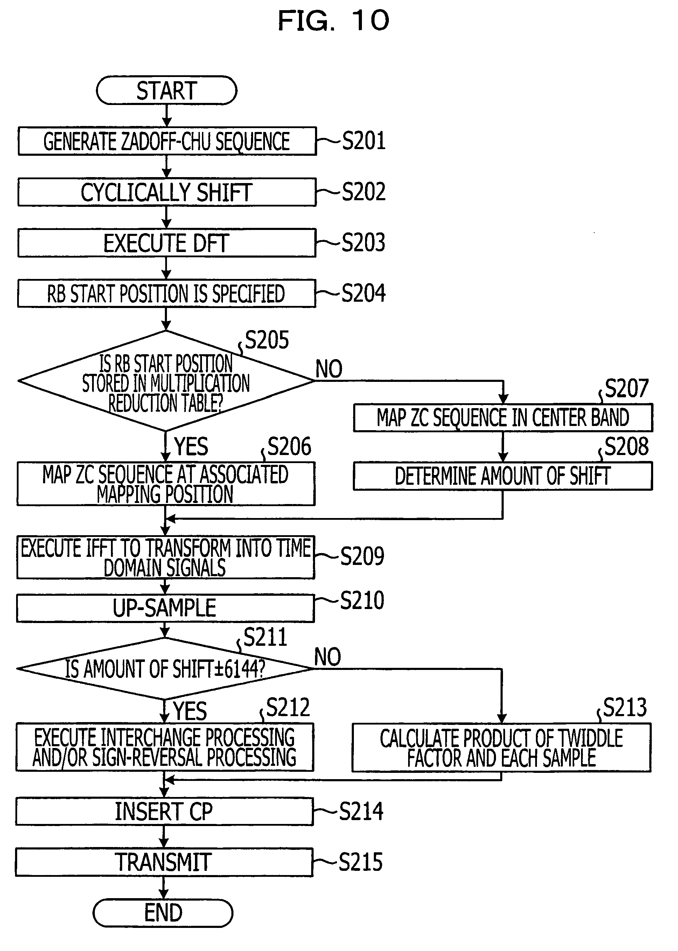

Next, a flow of the processing performed by the radio communication device 10 will be described with reference to FIG. 10. FIG. 10 is a flowchart illustrating a flow of the processing performed by the radio communication device. The radio communication device 10 starts processing, upon being triggered by establishment of a downlink with the base station.

In operation S201, the radio communication device 10 generates a ZC sequence. In operation S202, the radio communication device 10 cyclically shifts the order of the generated ZC sequence. In operation S203, the radio communication device 10 executes DFT processing on the cyclically shifted ZC sequence. In operation S204, the radio communication device 10 receives a notification specifying an RB start position from an upper layer.

In operation S205, the radio communication device 10 determines whether or not the specified RB start position is stored in the multiplication reduction table unit 28. When it is determined that the specified RB start position is stored in the multiplication reduction table unit 28 (i.e., affirmative in operation S205), the process proceeds to operation S206 in which the radio communication device 10 maps the ZC sequence at a mapping position included in the 2048 subcarriers and associated with the specified RB start position.

Next, in operation S209, the radio communication device 10 executes IFFT processing on the 2048 subcarriers on which the ZC sequence is mapped, to transform the subcarriers into time domain signals having a sequence length of 2048 samples. Subsequently, in operation S210, the radio communication device 10 up-samples the transformed time domain signals having the sequence length of 2048 samples to expand the sampled time domain signals to time domain signals having a sequence length of 24576 samples.

In operation S211, the radio communication device 10 determines whether or not the amount of shift is $\pm 6144$. When the amount of shift is $\pm 6144$ (i.e., affirmative in operation S211), the process proceeds to operation S212 in which the radio communication device 10 executes the interchange processing and/or the sign-reversal processing to shift the band of the ZC-sequence-mapped subcarriers to the specified band.

In operation S214, the radio communication device 10 inserts a CP for demodulation to the time domain signals having the sequence length of 24576 samples. In operation S215, the radio communication device 10 transmits the CP-inserted time domain signals to the base station. Thereafter, the radio communication device 10 ends the processing.

On the other hand, when it is determined that the specified RB start position is not stored in the multiplication reduction table unit 28 (i.e., negative in operation S205), the process proceeds to operation S207 in which the radio communication device 10 maps the ZC sequence onto the center band of the 2048 subcarriers. In operation S208, the radio communication device 10 determines an amount of shift by which the band of the ZC-sequence-mapped subcarriers is to be shifted to the specified RB start position.

When the amount of shift is other than $\pm 6144$ (i.e., negative in operation S211), the process proceeds to operation S213 in which the radio communication device 10 calculates the product of the twiddle factor and each sample by using the amount of shift determined in operation S208.

[Advantage of Second Embodiment]

As described above, the radio communication device 10 may transmit PRACHs by executing the IFFT processing on the 2048 subcarriers, without executing IDFT processing an all of the 24576 subcarriers. Consequently, the communication device 10 may reduce the number of operations of the multiplication processing, typically performed a vast number of times, in the IDFT processing for transmitting PRACHs.

The radio communication device 10 also maps the ZC sequence onto a band in which the amount by which the band of the ZC-sequence-mapped subcarriers is to be shifted to the specified band becomes $\pm 6144$. That is, the radio communication device 10 maps the ZC sequence onto, of the 2048 subcarriers, a band in which the twiddle factor is an integer power of the imaginary unit. When the twiddle factor is an integer power of the imaginary unit, the radio communication device 10 may calculate the product of the twiddle factor and each sample by only performing the interchange processing and/or the sign-reversal processing on each sample. Thus, it is possible to further reduce the amount of the multiplication processing. As a result, the radio communication device 10 may further reduce the amount of the multiplication processing needed for PRACH transmission.

The radio communication device 10 also has the multiplication reduction table unit 28 in which the RB start positions, at which the amounts of shift by which the band of the ZC-sequence-mapped subcarriers is be shifted to a specified position become $\pm 6144$, and the mapping positions are associated with each other. Thus, each time the RB start position is specified by the upper layer, the radio communication device 10 may obtain the appropriate mapping position and the appropriate amount of shift, without calculating the mapping position and the amount of shift. As a result, the radio communication device 10 may further reduce the amount of calculation processing for the mapping position and the amount of shift.

When the twiddle factor is other than an integer power of the imaginary unit, the radio communication device 10 calculates the product of the twiddle factor and each of the samples up-sampled by the up-sampling unit 25. When the twiddle factor is an integer power of the imaginary unit, the radio communication device 10 executes the interchange processing and/or the sign-reversal processing to shift the band of the ZC-sequence-mapped subcarriers to the specified band. Thus, the radio communication device 10 may execute PRACH transmission, when the twiddle factor is other than an integer power of the imaginary unit, and may reduce the amount of multiplication processing needed for PRACH transmission, when the twiddle factor is an integer power of the imaginary unit.

[Third Embodiment]

While the embodiments have been described above, various other embodiments are also possible. Some other embodiments will now be described.

(1) Application to Different Bandwidth

The radio communication device 10 according to the second embodiment described above has a bandwidth of 20 MHz and uses 14400 subcarriers in the center band of the 24576 subcarriers to transmit PRACHs. However, the embodiment is not limited to the above-described example and may be applied to a radio communication device using another bandwidth.

A radio communication device having a bandwidth of 40 MHz will be described below by way example. When the bandwidth is 40 MHz, the radio communication device transmits a PRACH using continuous 6 RBs of the 28800 subcarriers (RB#0 to RB#199) in the center band of all the 49152 subcarriers.

The radio communication device generates a ZC sequence having a sequence length of 839 samples and cyclically shifts the generated ZC sequence. Next, the radio communication device executes DFT processing on the cyclically shifted ZC sequence. The radio communication device then maps, onto the 2048 subcarriers, the ZC sequence on which the DFT processing is executed and executes IFFT processing on the ZC-sequence-mapped subcarriers to transform the subcarriers into time domain signals having a sequence length of 2048 samples.

Thereafter, the radio communication device 10 up-samples the generated time domain signals having the sequence length of 2048 samples to expand the time domain signals to time domain signals having a sequence length of 49152 samples. Thereafter, the radio communication device 10 calculates the product of each of the twiddle factor and the expanded time domain signals having the sequence length of 49152 samples to shift the band of the ZC-sequence-mapped subcarriers to the specified band.

With this arrangement, the radio communication device 10 may transmit PRACHs in a bandwidth of 40 MHz without executing IDFT processing on the 49512 subcarriers, thus making it possible to significantly reduce the amount of the multiplication processing.

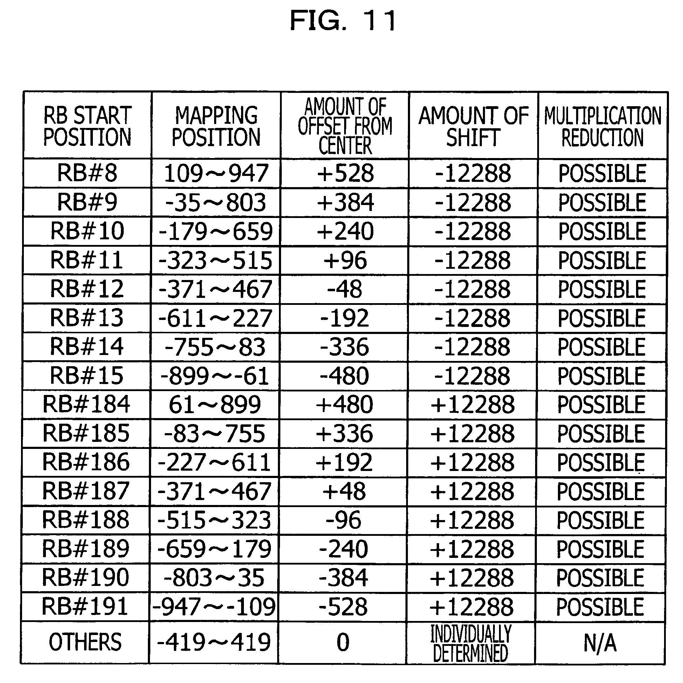

FIG. 11 illustrates RB start positions at which the amount of multiplication may be reduced at 40 MHz. As illustrated in FIG. 11, when the RB start position is to be set to one of RB#8 to RB#15 and RB#184 to RB#191, the radio communication device 10 may map the ZC sequence at a mapping position at which the amount of shift is $\pm 12288$. When the amount of shift is indicated by $n_{shift}$, the twiddle factor may be given by expression (9) below.

$$\exp\left( i \frac{2\pi n_{shift}}{49152} \cdot k \right) \quad \cdots (9)$$

Thus, the radio communication device maps the ZC sequence onto a band in which the amount of shift is $\pm 12288$, the twiddle factor becomes one of the values "1", "i", "-1", and "-i". When the twiddle factor is one of the values "1" "i", "-1" and "-i" the radio communication device shifts the ZC sequence to the specified band without executing the multiplication processing. Consequently, the radio communication device 10 may eliminate the need for the multiplication processing on the 16 RB start positions of the 195 RB start positions, thus making it possible to reduce or eliminate about 8% of the multiplication processing.

(2) Application to Channel Transmission other than PRACH

The radio communication device according to the second embodiment transmits a PRACH. The present embodiment, however, is not limited to the example, and the radio communication device may transmit a PUSCH (Physical Uplink Shared Channel), a PUCCH (Physical Uplink Control Channel), a DM-RS (Demodulation Reference Signal), an S-RS (Sounding Reference Signal), and so on.

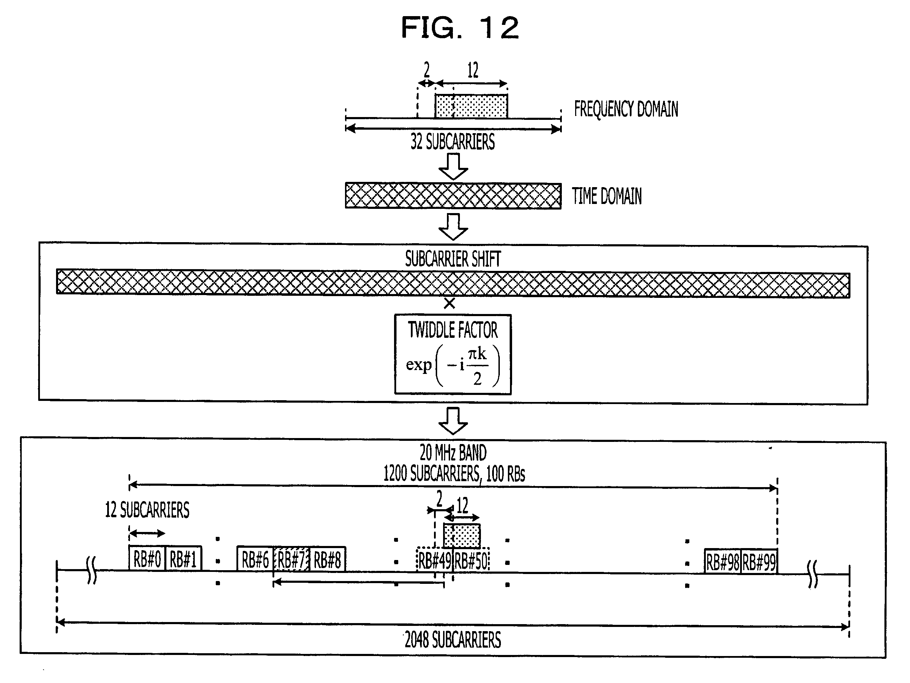

A radio communication device for transmitting a PUSCH will be described by way of example. As illustrated in FIG. 12, the radio communication device is assumed to transmit a PUSCH at a bandwidth of 20 MHz by using 100 RBs in a center band of 2048 subcarriers, each RB being constituted by 12 subcarriers. The radio communication device is assumed to map signals onto one-RB subcarriers of the 100-RB subcarriers. In addition, for transmission of a PUSCH, the radio communication device is assumed to map signals by using, as the RB start position, RB#7 out of the 100 RB subcarriers in which the RB at the lowest band edge is RB#0. FIG. 12 illustrates PUSCH transmission.

The radio communication device maps signals onto 12 subcarriers of 32 subcarriers. When the position RB#7 is to be set as a start position, the radio communication device maps signals onto a band displaced by two subcarriers from the center of the 32 subcarriers to a higher frequency, as illustrated in FIG. 12. The radio communication device then executes IFFT (Inverse Fast Fourier Transform) processing on the 32 subcarriers on which the ZC sequence is mapped, to transform the subcarriers into time domain signals having a sequence length of 32 samples. Next, the radio communication device up-samples the transformed time domain signals to expand the time domain signals to time domain signals having a sequence length of 2048 samples.

Thus, the radio communication device may transmit a PUSCH without executing IFFT processing on all of the 2048 subcarriers. As a result, the radio communication device may reduce the amount of multiplication processing needed for the PUSCH transmission.

In addition, the radio communication device determines the product of the twiddle factor and each of the expanded samples to shift the band of the signal-mapped subcarriers by ±512 subcarriers. The twiddle factor may be given by equation (10) below.

$$\exp\left(i\frac{2\pi n_{shift}}{2048}\cdot k\right) = \exp\left(i\frac{\pi}{2}\cdot k\right) \quad \cdots (1\,0)$$

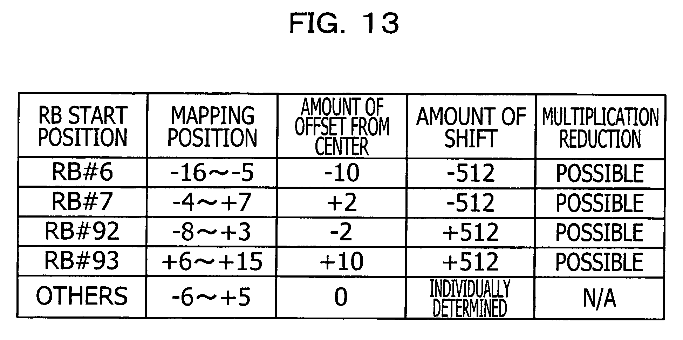

Thus, for shifting the band of the signal-mapped subcarriers to the specified band by ±512 subcarriers, the radio communication device may make the value of the twiddle factor to be equal to an integer power of the imaginary unit. As illustrated in FIG. 13, when the RB start position is to be set to one of RB#6 to RB#7 and RB#92 to RB#93, the radio communication device 10 may make the value of the twiddle factor to be equal to an integer power of the imaginary unit, since the amount of shift is ±512. FIG. 13 illustrates RB start positions at which the amount of multiplication may be reduced during PUSCH transmission with an IFFT size of 32.

When the radio communication device maps signals on a band in which the value of the twiddle factor is an integer power of the imaginary unit, as described above, the radio communication device reduces the amount of the multiplication processing for shifting the band of the signal-mapped subcarriers. As a result, the radio communication device may further reduce the amount of multiplication processing needed for PUSCH transmission.

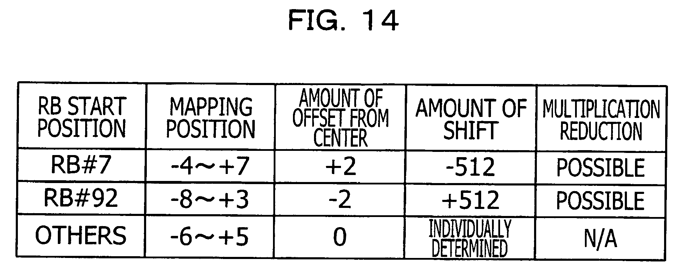

FIG. 14 illustrates RB start positions at which the amount of multiplication may be reduced during PUSCH transmission with an IFFT size of 16. As illustrated in FIG. 14, even for executing IFFT processing on 16 subcarriers, the radio communication device may reduce the amount of multiplication processing for shifting the band of signal-mapped subcarriers. Specifically, when the RB start position is to be set to RB#7 or RB#92, the radio communication device may map signals onto a band in which the amount of shift is ±512.

As a result, since the radio communication device may make the value of the twiddle factor to be an integer power of the imaginary unit, the radio communication device may reduce the amount of the multiplication processing for shifting the band of the signal-mapped subcarriers.

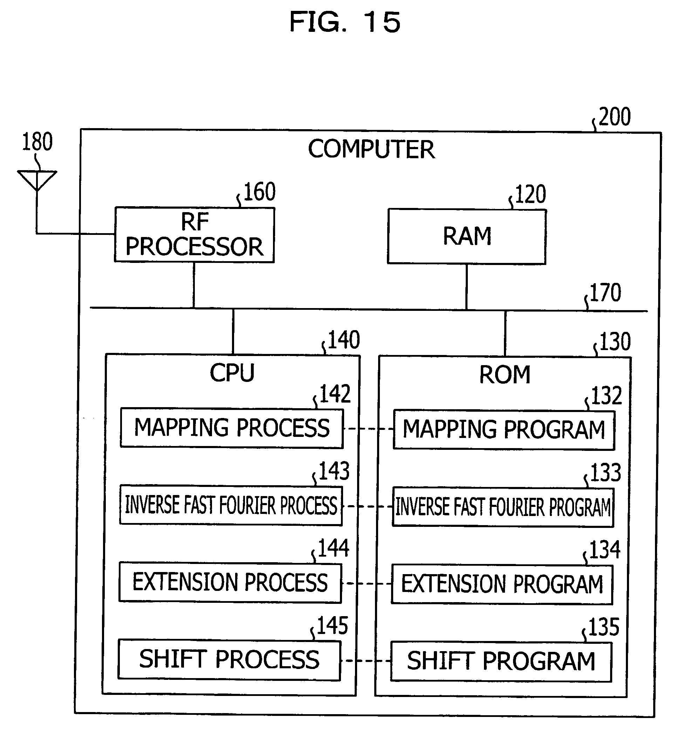

The communication device according to the first embodiment has been described above in conjunction with a case in which the hardware is used to realize the various types of processing. The embodiment, however, is not limited to the example, and a prepared program may be executed by a computer to realize the various types of processing. Accordingly, one example of a computer for executing a program having functions that are substantially the same as those of the communication device according to the first embodiment will be described below with reference to FIG. 15. FIG. 15 illustrates one example of a computer for executing a communication program.

A computer 200 illustrated in FIG. 15 has a configuration in which a RAM (random access memory) 120 and a ROM (read only memory) 130 are coupled to each other through a bus 170. In the computer 200, a CPU (central processing unit) 140 is also coupled to the bus 170. An RF processor 160 for modulating signals to be transmitted is further coupled to the bus 170. The RF processor 160 has an antenna 180 for transmitting the modulated signals.

The ROM 130 pre-stores a mapping program 132, an inverse fast Fourier program 133, an extension program 134, and a shift program 135. The CPU 140 reads and executes the programs 132 to 135 from the ROM 130 to thereby cause the programs 132 to 135 to serve as a mapping process 142, an inverse fast Fourier process 143, an extension process 144, and a shift process 145. The processes 142 to 145 provide substantially the same functions as those of the units 2 to 5 illustrated in FIG. 1. The processes 142 to 145 may also provide substantially the same functions as those of the units 23 to 26 according to the second embodiment.

The communication program described in the present embodiment may also be realized by causing a computer, such as a personal computer or a workstation, to execute the prepared program. The program may be distributed over a network, such as the Internet. The program is stored on a computer-readable storage media, such as a hard disk, a flexible disk (FD), a CD-ROM (compact disc read only memory), an MO (magneto optical) disc, and a DVD (digital versatile disc). The computer may read the program from the storage medium to execute the program.

All examples and conditional language recited herein are intended for pedagogical objects to aid the reader in understanding the invention and the concepts contributed by the inventor to furthering the art, and are to be construed as being without limitation to such specifically recited examples and conditions. Although the embodiment(s) of the present inventions have been described in detail, it should be understood that the various changes, substitutions, and alterations could be made hereto without departing from the scope of the invention.

**Claims**

1.  A communication device (10) comprising:

    a mapping unit (23) to map frequency domain signals including phase information onto a band, the band is one of bands of subcarriers for transmitting the frequency domain signals;
    an inverse fast fourier transform unit (24) to perform inverse fast fourier transform on the subcarriers on which the frequency domain signals are mapped by the mapping unit (23), to transform the subcarriers into time domain signals;
    an expanding unit (25) to increase the number of samples by up-samplings the time domain signals transformed by the inverse fast fourier transform unit (24); and
    a shifting unit (26) to shift the band of the frequency-domain-mapped subcarriers to the specified band;
    wherein when the twiddle factor for shifting the band to the specified band is an integer power of an imaginary unit, the shift unit (26) is configured to execute interchange processing for interchanging a real number component and an imaginary number component of each of the samples up-sampled by the expanding unit (25) and/or sign-reversal processing for reversing a sign of the real number component or the imaginary number component; and
    wherein when the twiddle factor for shifting the band to the specified band is other than an integer power of the imaginary unit, the shift unit (26) is configured to determine a product of the twiddle factor and each of the samples up-sampled by the expanding unit (25).

2.  The communication device (10) according to claim 1, wherein:

    the mapping unit (23) comprises a multiplication reduction table (28) to store a subcarrier band in which a value of the twiddle factor is an integer power of the imaginary unit, the subcarrier band is one of the bands of subcarriers onto which the frequency domain signals are mappable; and
    when the twiddle factor for shifting the band to the specified band is an integer power of an imaginary unit, the mapping unit (23) is configured to map the frequency domain signals onto the band that is the subcarrier band stored in the multiplication reduction table (28).

3.  The communication device (10) according to claim 1 or 2, wherein when the twiddle factor is 1, the shift unit (26) is configured to use a value of each of the samples, up-sampled by the expanding unit (25), as a value of a sample resulting from shifting of the band of the frequency-domain-signal-mapped subcarriers to the specified band.;
    when the twiddle factor is the imaginary unit, the shift unit (26) is configured to perform the interchange processing and reverse the sign of the real number component resulting from the interchange processing to shift the band of the frequency-domain-signal-mapped subcarriers to the specified band;
    when the twiddle factor is -1, the shift unit (26) is configured to perform the sign-reversal processing to shift the band of the frequency-domain-signal-mapped subcarriers to the specified band; and
    when the twiddle factor is a negative imaginary unit, the shift unit (26) is configured to perform the interchange processing and reverse the sign of the imaginary number component resulting from the interchange processing to shift the band of the frequency-domain-signal-mapped subcarriers to the specified band.

4.  A communication method comprising:

    mapping frequency domain signals including phase information onto a band, the band is one of bands of subcarriers for transmitting the frequency domain signals;
    performing inverse fast fourier transform on the subcarriers on which the frequency domain signals are mapped by the mapping, to transform the subcarriers into time domain signals;
    increasing a number of samples by up-sampling the time domain signals transformed by the inverse fast fourier transforming; and
    when a twiddle factor for shifting the band to a specified band is an integer power of an imaginary unit, executing interchange processing for interchanging a real number component and an imaginary number component of each of the samples up-sampled by the increasing or sign-reversal processing for reversing a sign of the real number component or the imaginary number component to shift the band of the frequency-domain-mapped subcarriers to the specified band, and
    when the twiddle factor for shifting the band to the specified band is other than an integer power of the imaginary unit, determining a product of the twiddle factor and each of the samples up-sampled by the increasing.

**Patentansprüche**

1. Kommunikationsgerät (10), welches Folgendes umfasst:

   eine Abbildungseinheit (23) zum Abbilden von Frequenzbereichssignalen, einschließlich Phaseninformationen, auf ein Band, wobei das Band eines der Bänder von Zwischenträgern für das Senden der Frequenzbereichssignale ist;
   eine IFFT (Inverse Fast Fourier Transform)-Einheit (24) zum Durchführen von inverser schneller Fourier-Transformation auf den Zwischenträgern, auf welchen die Frequenzbereichssignale durch die Abbildungseinheit (23) abgebildet werden, zum Transformieren der Zwischenträger in Zeitbereichssignale;
   eine Erweiterungseinheit (25) zum Erhöhen der Anzahl von Samples durch Up-Sampling der Zeitbereichssignale, die durch die IFFT-Einheit (24) transformiert wurden; und
   eine Verschiebeeinheit (26) zum Verschieben des Bandes der frequenzbereichsabgebildeten Zwischenträger zu einem spezifizierten Band;
   wobei, wenn der Drehfaktor zum Verschieben des Bandes zu dem spezifizierten Band eine ganzzahlige Potenz einer imaginären Einheit ist, die Verschiebeeinheit (26) zum Ausführen von Austauschverarbeitung zum Austauschen einer reellen Zahlenkomponente und einer imaginären Zahlenkomponente von jedem der Samples, die durch die Erweiterungseinheit (25) upgesampelt wurden, und/oder Zeichenumkehrverarbeitung zum Umkehren eines Zeichens der reellen Zahlenkomponente oder der imaginären Zahlenkomponente konfiguriert ist; und
   wobei, wenn der Drehfaktor zum Verschieben des Bandes zu dem spezifizierten Band ein anderer als eine ganzzahlige Potenz der imaginären Einheit ist, die Verschiebeeinheit (26) zum Bestimmen eines Produktes des Drehfaktors und jedem der Samples, die durch die Erweiterungseinheit (25) upgesampelt wurden, konfiguriert ist.

2. Kommunikationsgerät (10) nach Anspruch 1, wobei:

   die Abbildungseinheit (23) eine Multiplikationsreduktionstabelle (28) zum Speichern eines Zwischenträgerbandes umfasst, in welchem ein Wert des Drehfaktors eine ganzzahlige Potenz der imaginären Einheit ist, wobei das Zwischenträgerband eines der Bänder von Zwischenträgern ist, auf welche die Frequenzbereichssignale abgebildet werden können; und
   wenn der Drehfaktor zum Verschieben des Bandes zu dem spezifizierten Band eine ganzzahlige Potenz einer imaginären Einheit ist, die Abbildungseinheit (23) zum Abbilden der Frequenzbereichssignale auf das Band, bei dem es sich um das Zwischenträgerband handelt, welches in der Multiplikationsreduktionstabelle (28) gespeichert ist, konfiguriert ist.

3. Kommunikationsgerät (10) nach Anspruch 1 oder 2, wobei, wenn der Drehfaktor 1 ist, die Verschiebeeinheit (26) zum Verwenden eines Wertes von jedem der Samples, die durch die Erweiterungseinheit (25) upgesampelt wurden, als einen Wert eines Samples, das aus dem Verschieben des Bandes der Frequenzbereichssignal-abgebildeten Zwischenträger zu dem spezifizierten Band resultiert, konfiguriert ist;
   wenn der Drehfaktor die imaginäre Einheit ist, die Verschiebeeinheit (26) zum Durchführen der Austauschverarbeitung und Umkehren des Zeichens der reellen Zahlenkomponente, die aus der Austauschverarbeitung resultiert, zum Verschieben des Bandes der Frequenzbereichssignal-abgebildeten Zwischenträger zu dem spezifizierten Band konfiguriert ist;
   wenn der Drehfaktor -1 ist, die Verschiebeeinheit (26) zum Durchführen der Zeichenumkehrverarbeitung zum Verschieben des Bandes der Frequenzbereichssignal-abgebildeten Zwischenträger zu dem spezifizierten Band konfiguriert ist; und
   wenn der Drehfaktor eine negative imaginäre Einheit ist, die Verschiebeeinheit (26) zum Durchführen der Austauschverarbeitung und Umkehren des Zeichens der imaginären Zahlenkomponente, die aus der Austauschverarbeitung resultiert, zum Verschieben des Bandes der Frequenzbereichssignal-abgebildeten Zwischenträger zu dem spezifizierten Band konfiguriert ist.

4. Kommunikationsverfahren, welches Folgendes umfasst:

   Abbilden von Frequenzbereichssignalen, einschließlich Phaseninformationen, auf ein Band, wobei das Band eines der Bänder von Zwischenträgern zum Senden der Frequenzbereichssignale ist;
   Durchführen inverser schneller Fourier-Transformation auf den Zwischenträgern, auf welchen die Frequenzbereichssignale durch Abbildung abgebildet werden, zum Transformieren der Zwischenträger in Zeitbereichssignale;

Erhöhen der Anzahl von Samples durch Up-Sampling der Zeitbereichssignale, die durch die inverse schnelle Fourier-Transformation transformiert wurden; und

wenn ein Drehfaktor zum Verschieben des Bandes zu einem spezifizierten Band eine ganzzahlige Potenz einer imaginären Einheit ist, Ausführen von Austauschverarbeitung zum Austauschen einer reellen Zahlenkomponente und einer imaginären Zahlenkomponente von jedem der Samples, die durch die Erhöhungs- oder Zeichenumkehrverarbeitung upgesampelt wurden, zum Umkehren eines Zeichens der reellen Zahlenkomponente oder der imaginären Zahlenkomponente zum Verschieben des Bandes der Frequenzbereich-abgebildeten Zwischenträger zu dem spezifizierten Band, und

wenn der Drehfaktor zum Verschieben des Bandes zu dem spezifizierten Band ein anderer ist als eine ganzzahlige Potenz der imaginären Einheit ist, Bestimmen eines Produktes des Drehfaktors und jedes der Samples, die durch das Erhöhen upgesampelt wurden.

## Revendications

1. Dispositif de communication (10) comprenant :

   une unité de mappage (23) pour mapper des signaux dans le domaine fréquentiel incluant des informations de phase sur une bande, la bande étant une des bandes de sous-porteuses pour transmettre les signaux dans le domaine fréquentiel ;

   une unité de transformation de Fourier rapide inverse (24) pour effectuer une transformation de Fourier rapide inverse sur les sous-porteuses sur lesquelles les signaux dans le domaine fréquentiel sont mappés par l'unité de mappage (23), pour transformer les sous-porteuses en signaux dans le domaine temporel ;

   une unité d'expansion (25) pour accroître le nombre d'échantillons par suréchantillonnage des signaux dans le domaine temporel transformés par l'unité de transformation de Fourier rapide inverse (24) ; et

   une unité de décalage (26) pour décaler la bande des sous-porteuses mappées dans le domaine fréquentiel vers la bande spécifiée ;

   dans lequel, lorsque le facteur de rotation pour décaler la bande vers la bande spécifiée est une puissance entière d'une unité imaginaire, l'unité de décalage (26) est configurée pour exécuter un traitement d'échange pour échanger une composante de nombre réel et une composante de nombre imaginaire de chacun des échantillons suréchantillonnés par l'unité d'expansion (25) et/ou un traitement d'inversion de signe pour inverser le signe de la composante de nombre réel ou de la composante de nombre imaginaire ; et

   dans lequel, lorsque le facteur de rotation pour décaler la bande vers la bande spécifiée est différent d'une puissance entière de l'unité imaginaire, l'unité de décalage (26) est configurée pour déterminer le produit du facteur de rotation et de chacun des échantillons suréchantillonnés par l'unité d'expansion (25).

2. Dispositif de communication (10) selon la revendication 1, dans lequel :

   l'unité de mappage (23) comprend une table de réduction de multiplication (28) pour mémoriser une bande de sous-porteuses dans laquelle la valeur du facteur de rotation est une puissance entière de l'unité imaginaire, la bande de sous-porteuses est une des bandes de sous-porteuses sur lesquelles les signaux dans le domaine fréquentiel peuvent être mappés ; et

   lorsque le facteur de rotation pour décaler la bande vers la bande spécifiée est une puissance entière d'une unité imaginaire, l'unité de mappage (23) est configurée pour mapper les signaux dans le domaine fréquentiel sur la bande qui est la bande de sous-porteuses mémorisée dans la table de réduction de multiplication (28).

3. Dispositif de communication (10) selon la revendication 1 ou 2, dans lequel, lorsque le facteur de rotation est égal à 1, l'unité de décalage (26) est configurée pour utiliser une valeur de chacun des échantillons, suréchantillonnés par l'unité d'expansion (25), en tant que valeurs d'un échantillon résultant du décalage de la bande de sous-porteuses mappée du signal dans le domaine fréquentiel vers la bande spécifiée ;

   lorsque le facteur de rotation est égal à l'unité imaginaire, l'unité de décalage (26) est configurée pour effectuer le traitement d'échange et inverser le signe de la composante de nombre réel résultant du traitement d'échange pour décaler la bande de sous-porteuses mappée du signal dans le domaine fréquentiel vers la bande spécifiée ;

   lorsque le facteur de rotation est égal à -1, l'unité de décalage (26) est configurée pour effectuer le traitement d'inversion de signe pour décaler la bande de sous-porteuses mappée du signal dans le domaine fréquentiel vers la bande spécifiée ; et

   lorsque le facteur de rotation est une unité imaginaire négative, l'unité de décalage (26) est configurée pour effectuer le traitement d'échange et inverser le signe de la composante de nombre imaginaire résultant du traitement d'échange pour décaler la bande de sous-porteuses mappée du signal dans le domaine fréquentiel vers la bande spécifiée.

4. Procédé de communication comprenant :

le mappage de signaux dans le domaine fréquentiel incluant des informations de phase sur une bande, la bande est une des bandes de sous-porteuses pour transmettre les signaux dans le domaine fréquentiel ;

l'exécution d'une transformation de Fourier rapide inverse sur les sous-porteuses sur lesquelles les signaux dans le domaine fréquentiel sont mappés par le mappage, pour transformer les sous-porteuses en signaux dans le domaine temporel ;

l'accroissement du nombre d'échantillons par suréchantillonnage des signaux dans le domaine temporel transformés par la transformation de Fourier rapide inverse ; et

lorsque le facteur de rotation pour décaler la bande vers une bande spécifiée est une puissance entière d'une unité imaginaire, l'exécution d'un traitement d'échange pour échanger une composante de nombre réel et une composante de nombre imaginaire de chacun des échantillons suréchantillonnés par le traitement d'accroissement ou d'inversion de signe pour inverser le signe de la composante de nombre réel ou de la composante de nombre imaginaire pour décaler la bande des sous-porteuses mappées dans le domaine fréquentiel vers la bande spécifiée ; et

lorsque le facteur de rotation pour décaler la bande vers la bande spécifiée est différent d'une puissance entière de l'unité imaginaire, la détermination du produit du facteur de rotation et de chacun des échantillons suréchantillonnés par l'accroissement.

FIG. 1

# FIG. 2

RADIO COMMUNICATION DEVICE — 10

BASEBAND PROCESSOR — 11

- UPPER LAYER → ZC SEQUENCE NUMBER
- UPPER LAYER → AMOUNT OF CYCLIC SHIFT
- UPPER LAYER → RB START POSITION
- 28 → MULTIPLICATION REDUCTION TABLE UNIT

ZADOFF-CHU SEQUENCE GENERATOR (20) → CYCLIC SHIFT UNIT (21) → DFT UNIT (22) → SUBCARRIER MAPPING UNIT (23) → IFFT UNIT (24) → UP-SAMPLING UNIT (25) → SUBCARRIER SHIFT UNIT (26) → CP INSERTING UNIT (27) → RF TRANSMITTER (12)

AMOUNT OF SHIFT FOR SUBCARRIERS

13 — antenna

EP 2 326 054 B1

# FIG. 3

14400 SUBCARRIERS = 20 MHz

RB#0    RB#1                                      RB#99

... | | | | ... | ... | | ...

144 SUBCARRIERS

24576 SUBCARRIERS = 30.72 MHz

# FIG. 4

| RB START POSITION | MAPPING POSITION | AMOUNT OF OFFSET FROM CENTER | AMOUNT OF SHIFT | MULTIPLICATION REDUCTION |
|---|---|---|---|---|
| RB#1 | -899~-61 | -480 | -6144 | POSSIBLE |
| RB#2 | -755~83 | -336 | -6144 | POSSIBLE |
| RB#3 | -611~227 | -192 | -6144 | POSSIBLE |
| RB#4 | -467~371 | -48 | -6144 | POSSIBLE |
| RB#5 | -323~515 | +96 | -6144 | POSSIBLE |
| RB#6 | -179~659 | +240 | -6144 | POSSIBLE |
| RB#7 | -35~803 | +384 | -6144 | POSSIBLE |
| RB#8 | 109~947 | +528 | -6144 | POSSIBLE |
| RB#86 | -947~-109 | -528 | +6144 | POSSIBLE |
| RB#87 | -803~35 | -384 | +6144 | POSSIBLE |
| RB#88 | -659~179 | -240 | +6144 | POSSIBLE |
| RB#89 | -515~323 | -96 | +6144 | POSSIBLE |
| RB#90 | -371~467 | +48 | +6144 | POSSIBLE |
| RB#91 | -227~611 | +192 | +6144 | POSSIBLE |
| RB#92 | -83~755 | +336 | +6144 | POSSIBLE |
| RB#93 | 61~899 | +480 | +6144 | POSSIBLE |
| OTHERS | -419~419 | 0 | INDIVIDUALLY DETERMINED | N/A |

FIG. 5

| 1 | 2 | 3 | ..... | 839 |
|---|---|---|-------|-----|
| 1 | 2 | 3 | ... | 839 |

| 1 | 2 | 3 | ..... | 419 | 420 | .... | 839 |
|---|---|---|-------|-----|-----|------|-----|
| 420 | 421 | 422 | ... | 839 | 1 | ... | 419 |

# FIG. 6

| | |
|---|---|
| ZADOFF-CHU SEQUENCE GENERATION | ~S101 |
| CYCLICAL SHIFT | ~S102 |
| DFT ON 839 POINTS | ~S103 |

0 | 1 | ··· | 837 | 838  FREQUENCY DOMAIN

SUBCARRIER MAPPING ~S104

-1024    839    1023
FREQUENCY DOMAIN
2048 SUBCARRIERS

IFFT ON 2048 POINTS ~S105

-1024    1023
FREQUENCY DOMAIN

IFFT

TIME DOMAIN
2048 SAMPLES

UP-SAMPLING ~S106

2048 SAMPLES
TIME DOMAIN

TIME DOMAIN
24576 SAMPLES

A
-12288    839    12287
FREQUENCY DOMAIN
24576 SUBCARRIERS

SUBCARRIER SHIFT ~S107

TWIDDLE FACTOR
×    B
TIME DOMAIN
24576 SAMPLES

C
-12288    839    12287
FREQUENCY DOMAIN
24576 SUBCARRIERS

| | |
|---|---|
| CP INSERTION | ~S108 |
| TRANSMISSION | ~S109 |

## FIG. 7

SUBCARRIER SHIFT UNIT

AMOUNT OF SHIFT

CLOCK CONTROLLER — 30

CLOCK GATING A — 31

CLOCK

UP-SAMPLING UNIT — 25

INPUT DATA

TWIDDLE-FACTOR MULTIPLYING UNIT — 33

AMOUNT OF SHIFT

TWIDDLE-FACTOR SELECTION CONTROLLER — 36

TWIDDLE FACTOR

37 ⊗

AMOUNT OF SHIFT

OUTPUT DATA SELECTOR UNIT — 35

OUTPUT DATA

CP INSERTING UNIT — 27

— 26

IQ REVERSING/INTERCHANGING UNIT — 41

IQ WITHOUT CHANGE

INTERCHANGING UNIT A — 38

INTERCHANGING UNIT B — 39

INTERCHANGING UNIT C — 40

DATA SELECTOR — 34

AMOUNT OF SHIFT

CLOCK GATING B — 32

CLOCK

EP 2 326 054 B1

# FIG. 8

839

FREQUENCY DOMAIN

2048 SUBCARRIERS

TIME DOMAIN

A

$$\times$$

TWIDDLE FACTOR

$$\exp\left(-i\,\frac{63\,\pi k}{128}\right)$$

B

20 MHz BAND
14400 SUBCARRIERS, 100 RBs

144 SUBCARRIERS

RB#0 | RB#1 | ... | RB#5 | ... | RB#10 | ... | RB#47 | ... | RB#52 | ... | ... | RB#98 | RB#99

24576 SUBCARRIERS

EP 2 326 054 B1

# FIG. 9

FREQUENCY DOMAIN

96  839  96

2048 SUBCARRIERS

TIME DOMAIN

SUBCARRIER SHIFT

A

TWIDDLE FACTOR

$$\exp\left(-i\frac{\pi k}{2}\right) = -i^{k}$$

×

20 MHz BAND
14400 SUBCARRIERS, 100 RBs

96

RB#47  RB#52

RB#51  RB#10

RB#0  RB#1

144 SUBCARRIERS

RB#98  RB#99

24576 SUBCARRIERS

# FIG. 10

```
                          ┌──────────┐
                          │  START   │
                          └────┬─────┘
                               ▼
        ┌──────────────────────────────────────┐
        │   GENERATE ZADOFF-CHU SEQUENCE       │──S201
        └──────────────────┬───────────────────┘
                           ▼
        ┌──────────────────────────────────────┐
        │        CYCLICALLY SHIFT              │──S202
        └──────────────────┬───────────────────┘
                           ▼
        ┌──────────────────────────────────────┐
        │          EXECUTE DFT                 │──S203
        └──────────────────┬───────────────────┘
                           ▼
        ┌──────────────────────────────────────┐
        │   RB START POSITION IS SPECIFIED     │──S204
        └──────────────────┬───────────────────┘
                           ▼
```

S205

IS RB START POSITION STORED IN MULTIPLICATION REDUCTION TABLE?

NO → S207

MAP ZC SEQUENCE IN CENTER BAND

YES S206

MAP ZC SEQUENCE AT ASSOCIATED MAPPING POSITION

S208

DETERMINE AMOUNT OF SHIFT

EXECUTE IFFT TO TRANSFORM INTO TIME DOMAIN SIGNALS ──S209

UP-SAMPLE ──S210

S211

IS AMOUNT OF SHIFT±6144?

NO → S213

CALCULATE PRODUCT OF TWIDDLE FACTOR AND EACH SAMPLE

YES S212

EXECUTE INTERCHANGE PROCESSING AND/OR SIGN-REVERSAL PROCESSING

INSERT CP ──S214

TRANSMIT ──S215

END

# FIG. 11

| RB START POSITION | MAPPING POSITION | AMOUNT OF OFFSET FROM CENTER | AMOUNT OF SHIFT | MULTIPLICATION REDUCTION |
|---|---|---|---|---|
| RB#8 | 109~947 | +528 | -12288 | POSSIBLE |
| RB#9 | -35~803 | +384 | -12288 | POSSIBLE |
| RB#10 | -179~659 | +240 | -12288 | POSSIBLE |
| RB#11 | -323~515 | +96 | -12288 | POSSIBLE |
| RB#12 | -371~467 | -48 | -12288 | POSSIBLE |
| RB#13 | -611~227 | -192 | -12288 | POSSIBLE |
| RB#14 | -755~83 | -336 | -12288 | POSSIBLE |
| RB#15 | -899~-61 | -480 | -12288 | POSSIBLE |
| RB#184 | 61~899 | +480 | +12288 | POSSIBLE |
| RB#185 | -83~755 | +336 | +12288 | POSSIBLE |
| RB#186 | -227~611 | +192 | +12288 | POSSIBLE |
| RB#187 | -371~467 | +48 | +12288 | POSSIBLE |
| RB#188 | -515~323 | -96 | +12288 | POSSIBLE |
| RB#189 | -659~179 | -240 | +12288 | POSSIBLE |
| RB#190 | -803~35 | -384 | +12288 | POSSIBLE |
| RB#191 | -947~-109 | -528 | +12288 | POSSIBLE |
| OTHERS | -419~419 | 0 | INDIVIDUALLY DETERMINED | N/A |

# FIG. 12

FREQUENCY DOMAIN

12

2

32 SUBCARRIERS

TIME DOMAIN

SUBCARRIER SHIFT

TWIDDLE FACTOR
$$\exp\left(-i\frac{\pi k}{2}\right)$$

×

20 MHz BAND
1200 SUBCARRIERS, 100 RBs

RB#0 | RB#1

12 SUBCARRIERS

RB#6 | RB#7 | RB#8

RB#49 | RB#50

2
12

RB#98 | RB#99

2048 SUBCARRIERS

# FIG. 13

| RB START POSITION | MAPPING POSITION | AMOUNT OF OFFSET FROM CENTER | AMOUNT OF SHIFT | MULTIPLICATION REDUCTION |
|---|---|---|---|---|
| RB#6 | -16~-5 | -10 | -512 | POSSIBLE |
| RB#7 | -4~+7 | +2 | -512 | POSSIBLE |
| RB#92 | -8~+3 | -2 | +512 | POSSIBLE |
| RB#93 | +6~+15 | +10 | +512 | POSSIBLE |
| OTHERS | -6~+5 | 0 | INDIVIDUALLY DETERMINED | N/A |

## FIG. 14

| RB START POSITION | MAPPING POSITION | AMOUNT OF OFFSET FROM CENTER | AMOUNT OF SHIFT | MULTIPLICATION REDUCTION |
|---|---|---|---|---|
| RB#7 | -4~+7 | +2 | -512 | POSSIBLE |
| RB#92 | -8~+3 | -2 | +512 | POSSIBLE |
| OTHERS | -6~+5 | 0 | INDIVIDUALLY DETERMINED | N/A |

# FIG. 15

# FIG. 16

```
┌─────────────────────────┐
│ ZADOFF-CHU SEQUENCE     │─S1
│ GENERATION              │
├─────────────────────────┤
│ CYCLICAL SHIFT          │─S2
└─────────────────────────┘
```

| 0 | 1 | ⌧ ··· ⌧ | 837 | 838 | TIME DOMAIN
← 839 SAMPLES →

```
┌─────────────────────────┐
│ DFT ON 839 POINTS       │─S3
└─────────────────────────┘
```

| 0 | 1 | ··· | 837 | 838 | FREQUENCY DOMAIN

```
┌─────────────────────────┐
│ SUBCARRIER MAPPING      │─S4
└─────────────────────────┘
```

-12288          839                    12287
                                                FREQUENCY DOMAIN

← 24576 SUBCARRIERS →

```
┌─────────────────────────┐
│ IDFT ON 24576 POINTS    │─S5
└─────────────────────────┘
```

-12288                          12287
                                                FREQUENCY DOMAIN

⇩

TIME DOMAIN

← 24576 SAMPLES →

```
┌─────────────────────────┐
│ CP INSERTION            │─S6
├─────────────────────────┤
│ TRANSMISSION            │─S7
└─────────────────────────┘
```

## REFERENCES CITED IN THE DESCRIPTION

**Patent documents cited in the description**

- JP 2004159324 A

- JP 2006060433 A

**Non-patent literature cited in the description**

- **SESIA, S. ; TOUFIK, I. ; BAKER, M.** *LTE - The UMTS Long Term Evolution: From Theory to Practice,* 17 February 2009